# EUROPÄISCHE PATENTSCHRIFT

(11) **EP 1 997 203 B1**
(45) Veröffentlichungstag und Bekanntmachung des Hinweises auf die Patenterteilung: **17.04.2019**
(21) Anmeldenummer: 07722781.7
(22) Anmeldetag: 01.02.2007
(51) Int. Cl.: H02J 1/06, H02J 13/00, H04B 3/54

(54) **SYSTEM ZUR VERSORGUNG VON ELEKTRISCHEN VERBRAUCHERN MIT ENERGIE UND DATEN**
SYSTEM FOR SUPPLYING POWER AND DATA TO ELECTRICAL CONSUMERS
SYSTÈME D'ALIMENTATION DE RÉCEPTEURS ÉLECTRIQUES EN ÉNERGIE ET EN DONNÉES

(30) Priorität: 15.03.2006 DE 102006012307
(43) Veröffentlichungstag der Anmeldung: 03.12.2008
(73) Patentinhaber: SEW-EURODRIVE GmbH & Co. KG, 76646 Bruchsal (DE)
(72) Erfinder: KUHFUSS, Valentin, 76297 Stutensee (DE); PRAUTZSCH, Harald, 76139 Karlsruhe (DE); KOLLAR, Hans Jürgen, 76646 Bruchsal (DE)
(74) Vertreter: Tüngler, Eberhard
(86) Internationale Anmeldenummer: PCT/EP2007/000856
(87) Internationale Veröffentlichungsnummer: WO 2007/104384

(56) Entgegenhaltungen:
- EP-A- 0 664 598
- WO-A1-02/43220
- DE-A1- 1 613 569
- DE-A1-102004 043 186
- FR-A1- 2 684 250
- US-A- 5 194 858
- US-A- 5 637 933

## Beschreibung

Die Erfindung betrifft ein System.

Aus der DE 199 21 654 ist ein System bekannt, bei dem Antriebe aus einem Versorgungsmodul mit Gleichspannung versorgbar sind.

**Aus der** US 5 637 933 **ist ein elektrisches System bekannt, das T-förmige Verteiler aufweist.**

**Aus der** DE 1 613 569 **ist eine simultane Ausnutzung der Leitungen von Wechsel- oder Drehstromnetzen zur Energie- und Informationsübertragung bekannt.**

**Aus der** EP 0 664 598 A3 **ist ein elektrisches Leistungsversorgungssystem bekannt.**

**Aus der** US 5 194 858 **ist ein System zur Steuerung von elektrischer Leistung in einer Anlage bekannt.**

**Aus der** FR 2 684 250 **ist ein elektrisches Verteilungssystem hoher Qualität bekannt.**

**Aus der** DE 10 2004 043 186 A1 **ist als nächstliegender Stand der Technik ein multifunktionelles integriertes Automatisierungskabelsystem bekannt.**

**Aus der** WO 02/43220 A1 **ist ein Kabelsystem für große Blockdiagramme bekannt.**

Der Erfindung liegt daher die Aufgabe zugrunde, ein System zur dezentralen Versorgung von Antrieben weiterzubilden, wobei eine möglichst kostengünstige Verkabelung vorsehbar sein soll.

Drehstromkabel für die Versorgung von Verbrauchern mit einem dreiphasigen Spannungssystem, also Drehspannungssystem, sind ebenfalls bekannt und kostengünstig fertigbar.

Erfindungsgemäß wird die Aufgabe bei dem System nach den in Anspruch 1 angegebenen Merkmalen gelöst.

Wesentliche Merkmale der Erfindung bei dem System sind, dass es ein Versorgungsmodul umfasst, über welches Verbraucher mit Energie **und Daten** versorgbar sind,
wobei die Verbraucher mit dem Versorgungsmodul mittels zumindest drei Leitungen verbunden sind,
wobei zwei der Leitungen eine Spannungsversorgung für die Verbraucher bilden und die dritte Leitung zur Datenübertragung vorgesehen ist.

Von Vorteil ist dabei, dass ein einziges Versorgungsmodul für eine Automatisierungszelle notwendig ist. Es sind also Antriebe mit Energie und Information aus einem solchem Modul versorgbar über eine Verkabelung, die nur handelsübliche und daher kostengünstige Drehstromkabel umfasst. Eine 24V Steuerspannungsversorgung und/oder ein Feldbusanschluss ist überflüssig. **Die Daten werden überraschenderweise über eine Leitung des Drehstromkabels austauschbar.** Somit ist die Verlegung eines einzigen Kabels in der Anlage ausreichend. Es muss kein separates Kabel für Datenübertragung verlegt werden. Trotzdem sind Energie und Information voneinander separiert und nicht auf demselben physikalischen Träger, insbesondere zur Verminderung der Störungen bei Informationsübertragung.

Weiter ist vorteilhaft, dass die von einem Umrichter bei generatorischer Betriebsart des jeweiligen Antriebs, insbesondere bei Verwendung von rückspeisefähigen Umrichtern oder Matrix-Umrichtern, gegebenenfalls in die Drehstromkabel-Verkabelung rückgespeiste Energie anderen Antrieben zur Verfügung stellbar ist. Erfindungsgemäß ist im Versorgungsmodul einen Bremswiderstand vorgesehen zur Vernichtung überschüssiger Energie. Dieser Widerstand ist also zentral vorsehbar, wodurch die Verbraucher kompakter und kostengünstiger fertigbar sind. Außerdem ist deren Dichtungsproblematik vereinfacht. Die Antriebe sind also ohne einen solchen externen Bremswiderstand ausstattbar. Somit sind auch Probleme bei Dichtigkeit und der erhöhte Montageaufwand sowie die Materialkosten einsparbar.

Erfindungsgemäß sind die Antriebe mit einem integrierten Bremswiderstand zusätzlich ausgestattet.

Weiter vorteilig ist, dass die Netzentstörung und ein Überspannungsschutz zentral im Versorgungsmodul versehbar sind. Die jeweiligen Antriebe benötigen daher diese Mittel nicht und sind somit kompakter, einfacher und kostengünstiger herstellbar.

Die Erfindung ist also besonders vorteilhaft zur einfachen und schnellen Verkabelung einer Automatisierungszelle verwendbar, wobei geringe Störspannungen bei der Datenübertragung auftreten sollen.

Vorteilig ist auch, dass schon bestehende Verkabelungsstrukturen in Anlagen oder Maschinen für die Erfindung nutzbar sind. Es müssen also nur die entsprechenden Antriebe und das Versorgungsmodul in der Anlage eingebaut werden.

Erfindungsgemäß sind Verbraucher elektrische Antriebe. Von Vorteil ist dabei, dass die Verbraucher steuerbar und mit hohem Wirkungsgrad betreibbar sind.

Bei einer vorteilhaften Ausgestaltung ist als Spannungsversorgung über die beiden Leitungen eine einphasige Wechselspannung oder eine unipolare Spannung, wie Gleichspannung oder dergleichen, vorgesehen. Von Vorteil ist dabei, dass die Erfindung mit beiden Sorten von Versorgungsspannung wahlweise ausführbar ist.

Bei einer vorteilhaften Ausgestaltung sind die Verbraucher mit dem Versorgungsmodul mittels eines drei Leitungen umfassenden Drehstromkabels verbunden. Von Vorteil ist dabei, dass bekannte handelsübliche Drehstromkabel verwendbar sind.

Bei einer vorteilhaften Ausgestaltung umfasst das Versorgungsmodul Mittel zur Herstellung einer unipolaren Spannung, insbesondere Zwischenkreisspannung. Von Vorteil ist dabei, dass diese den Antrieben zur Verfügung stellbar ist.

Bei einer vorteilhaften Ausgestaltung sind vom Versorgungsmodul oder einem jeweiligen Antrieb die dritte Leitung auf zwei verschiedene elektrische Potentiale bringbar, insbesondere zur digitalen Datenübertragung. Von Vorteil ist dabei, dass das positive oder negative Potential der Zwischenkreisspannung auf die Datenleitung schaltbar ist und somit digitale Information übertragbar ist.

Bei einer vorteilhaften Ausgestaltung umfasst das Versorgungsmodul und/oder ein Antrieb zumindest eine Sende- und/oder eine Empfangsschaltung, die zur Datenübertragung über die dritte Leitung vorgesehen sind. Von Vorteil ist dabei, dass die dritte Leitung galvanisch getrennt ist und im Wesentlichen ungestört von den Störspannungen ist, welche auf den Energie-Leitungen auftreten können.

Erfindungsgemäß umfasst das Versorgungsmodul einen Bremswiderstand. Von Vorteil ist dabei, dass ein einziger genügt für das gesamte System. Somit sind Dichtigkeitsprobleme bei den versorgten Antrieben vermeidbar, auch wenn sie generatorisch betreibbar sind.

Bei einer vorteilhaften Ausgestaltung umfasst der Antrieb einen Umrichter und einen von diesem versorgbaren Elektromotor. Von Vorteil ist dabei, dass ein geregelter und somit gut steuerbarer Antrieb vorgesehen ist, insbesondere ein Antrieb mit hohem Wirkungsgrad.

Bei einer vorteilhaften Ausgestaltung umfasst das Versorgungsmodul einen Gleichrichter und einen Glättungskondensator, insbesondere Zwischenkreiskondensator, zur Herstellung der unipolaren Spannung. Von Vorteil ist dabei, dass die Gleichspannung zur Versorgung der Wechselrichter-Endstufen der Antreibe zentral zur Verfügung stellbar ist.

Bei einer vorteilhaften Ausgestaltung ist aus der unipolaren Spannung eine Endstufe, umfassend elektronische Leistungshalbleiterschalter, versorgbar. Von Vorteil ist dabei, dass IGBT oder ähnlich verlustarme Schalter verwendbar sind.

Erfindungsgemäß umfasst jeder Antrieb einen Bremswiderstand. Von Vorteil ist dabei, dass der Bremswiderstand integriert ausführbar ist und die Wärme über die gesamte Anlage aufgespreizt ist. Somit ist das Wärmeabfuhrproblem von Komponenten hohen Temperaturniveaus entschärft.

Erfindungsgemäß umfasst die Verkabelung zwischen Versorgungsmodul und Antrieben Drehstromkabel und Drehstrom-Verteilerkästen, insbesondere zur T-förmiger Drehstromverteilung. Von Vorteil ist dabei, dass einfache Mittel vorgesehen sind. Insbesondere sind schon bestehende Mittel bei Einführung der Erfindung verwendbar.

Bei einer vorteilhaften Ausgestaltung ist die T-förmige Drehstromverteilung innerhalb der Verbraucher realisiert. Somit muss also die Drehstromverdrahtung durch den Verbraucher durchgeschleift werden, damit der nächste nachgeordnete Verbraucher anschließbar ist. Das Gehäuse des Verbrauchers umfasst dabei auch den T-Punkt. Es ist also kein separates Gehäuse für die T-Verteilung notwendig.

Weitere Vorteile ergeben sich aus den Unteransprüchen.

Die Erfindung wird nun anhand von Abbildungen näher erläutert:

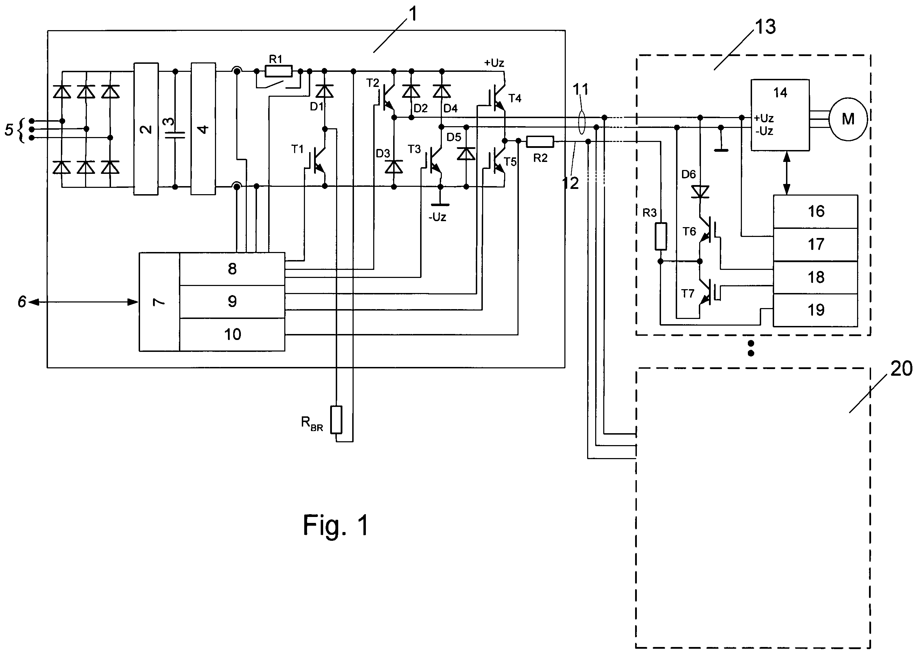

In der Figur 1 ist eine erfindungsgemäße Anlage schematisch gezeichnet.

Dabei umfasst die Anlage ein Versorgungsmodul 1, das vom Netz versorgbar ist über die Netzversorgung 5 und über eine Datenleitung 6 mit einer SPS oder einem anderen Rechner zum Datenaustausch verbindbar ist.

Das Versorgungsmodul umfasst einen Gleichrichter, dem eine Netzentstörung 2 nachgeordnet ist. Ein Zwischenkreiskondensator 3 ist zur Glättung der unipolar gleichgerichteten Spannung vorgesehen. Wahlweise kann dem Zwischenkreiskondensator 3 ein Tief/Hochsetzsteller 4 nachgeordnet werden zur Herstellung der gewünschten Zwischenkreisspannung, aus der die Endstufe versorgbar ist.

Zur Regelung der Zwischenkreisspannung ist ein Bremswiderstand R_BR vorgesehen, der über einen elektronischen Halbleiterschalter, wie IGBT Transistor oder dergleichen, zu- oder abschaltbar ist. Zur Ansteuerung dieses Schalters ist die Steuerschaltung 8 vorgesehen. Diese ist mit Mitteln zur Erfassung der Zwischenkreisspannung und des Zwischenkreisstroms verbunden. Somit wird der Schalter spannungsabhängig ansteuerbar.

Aus den erfassten Messwerten ist ein Maß für die elektrische Leistung bestimmbar. Dies ist auch zur Regelung verwendbar.

Dabei ist die Zwischenkreisstromerfassung auf dem oberen und unteren Potential der Zwischenkreisspannung ausgeführt. Auf diese Weise ist nicht nur eine Kurzschlusserkennung, Überstromerkennung vorsehbar sondern auch eine Erdschlusserkennung. Die Verbraucher benötigen somit keine eigenen solchen Erkennungen, insbesondere keine Erdschlusserkennung.

Von der SPS oder dem anderen übergeordneten Rechner sind Daten übertragbar an die Kommunikations- und Steuereinheit 7, die mit der Steuerschaltung 8 verbunden ist. Hierzu ist die Datenleitung 6 entsprechend ausgeführt.

Die Endstufe umfasst Schalter zum Zuschalten oder Abschalten der Zwischenkreisspannung zu den verbundenen Antrieben. Hierzu sind die Schalter (T2, T3) vorgesehen. Zwei Leitungen 11 des Drehstromkabels versorgen somit die verbundenen Antriebe mit Gleichspannung.

Die Datenleitung 12 wird von einer Halbbrücke der Endstufe gespeist, welche zwei Schalter (T4, T5) umfasst. Somit ist das Potential dieser Datenleitung 12 auf positives oder negatives Potential (+Uz, -Uz) der Zwischenkreisspannung legbar. Auf diese Weise ist daher digitale Information übertragbar. Hierzu ist die Sendeschaltung 9 vorgesehen und mit den Schaltern T4, T5 der Halbbrücke verbunden. Entsprechend ist die Empfangsschaltung 10 mit der Datenleitung 12 des Drehstromkabels verbunden.

Zwei der drei Starkstromleitungen des Drehstromkabels sind also für die Leistungsversorgung der Antriebe und eine der Leitungen zur Datenübertragung vorgesehen.

Die Antriebe umfassen jeweils einen Motor M, der aus einem mit Gleichspannung betreibbaren Umrichter 14 versorgbar ist und eine Sendeschaltung 18 und eine Empfangsschaltung 19, welche aus einem Versorgungsteil, wie Netzteil 17, versorgbar sind und über eine Kommunikations- und Steuerschaltung 16 mit dem Umrichter 14 verbunden sind. Das Netzteil ist aus dem Drehstromkabel versorgbar, insbesondere aus den Leitungen 11.

Bei weiteren erfindungsgemäßen Ausführungsbeispielen umfasst das Versorgungsmodul einen Gleichrichter, dem die Netzentstörung 2 nicht nachgeordnet sondern netzseitig vorgeschaltet ist.

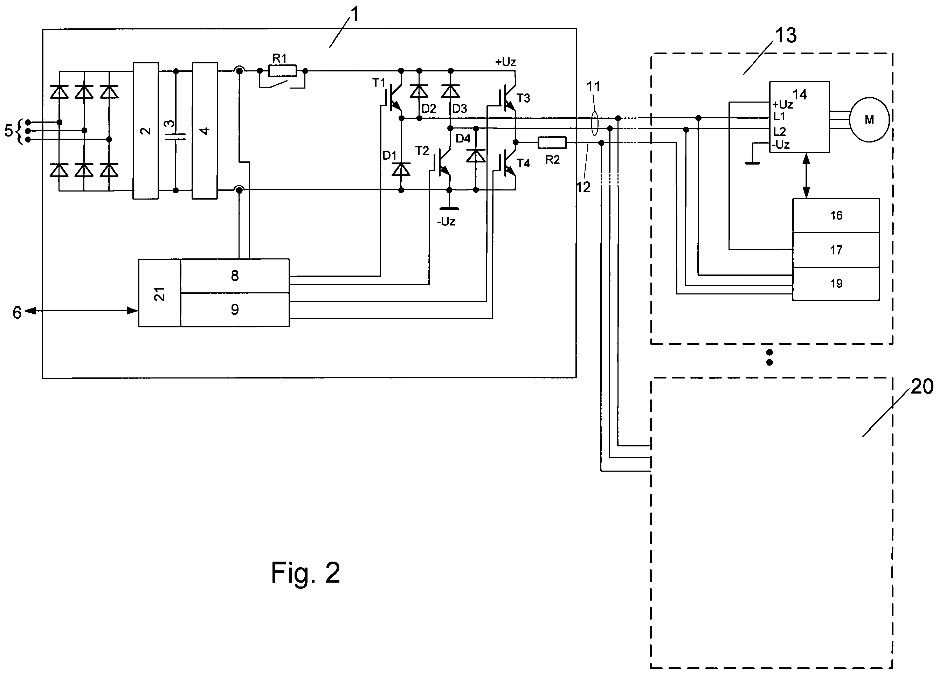

In dem weiteren Ausführungsbeispiel nach Figur 2 weist das Versorgungsmodul nur eine Sendeeinheit auf und die jeweiligen Antriebe nur Empfangseinheiten auf.

Somit ist die Kommunikations- und Steuerschaltung 16 als einfacher Protokoll- und/oder Pegelumsetzer ausführbar.

Auf diese Weise ist das gesamte System einfacher und kostengünstiger ausführbar, wobei allerdings die Datenübertragung nur unidirektional und nicht bidirektional wie bei Figur 1 ist.

Bei weiteren erfindungsgemäßen Ausführungsbeispielen sind statt der Antriebe auch andere Verbraucher anschließbar.

Bei weiteren erfindungsgemäßen Ausführungsbeispielen umfasst die Endstufe drei Halbbrücken, wobei die ersten beiden Halbbrücken der Erzeugung einer einphasigen Wechselspannung dienen, die an die Leitungen 11 zur Versorgung der Antriebe gelegt wird. Die dritte Halbbrücke ist gegenüber Figur 1 unverändert. Die Verkabelung umfasst wiederum ein handelsübliches Drehstromkabel. Die ersten beiden Halbbrücken, umfassend jeweils zwei Schalter, sind derart pulsweitenmoduliert oder mit Rechtecksignalspannung ansteuerbar, dass in zwei Leitungen des Drehstromkabels eine einphasige Wechselspannung erzeugbar ist, mit der die verbundenen Antriebe (13 bis 20) versorgbar sind. Vorteil ist dabei, dass die Alterung des Isoliersystems, umfassend das Drehstromkabel und weitere zur Isolierung vorgesehene Komponenten der Anlage, vermindert wird durch die Vermeidung einer dauerhaft unipolaren Polarisation. Die Antriebe benötigen in diesem Ausführungsbeispiel einen Gleichrichter und ebenfalls einen Glättungskondensator. Vorzugsweise ist der Gleichrichter einphasig ausgeführt. Es sind jedoch auch äquivalent wirkende Gleichrichter verwendbar, wie dreiphasige Gleichrichter oder dergleichen.

Bei weiteren Ausführungsbeispielen umfasst das Versorgungsmodul einen Matrix-Umrichter und ist somit netz-rückspeisefähig. In dieser Ausführung ist der Bremswiderstand R_BR einsparbar.

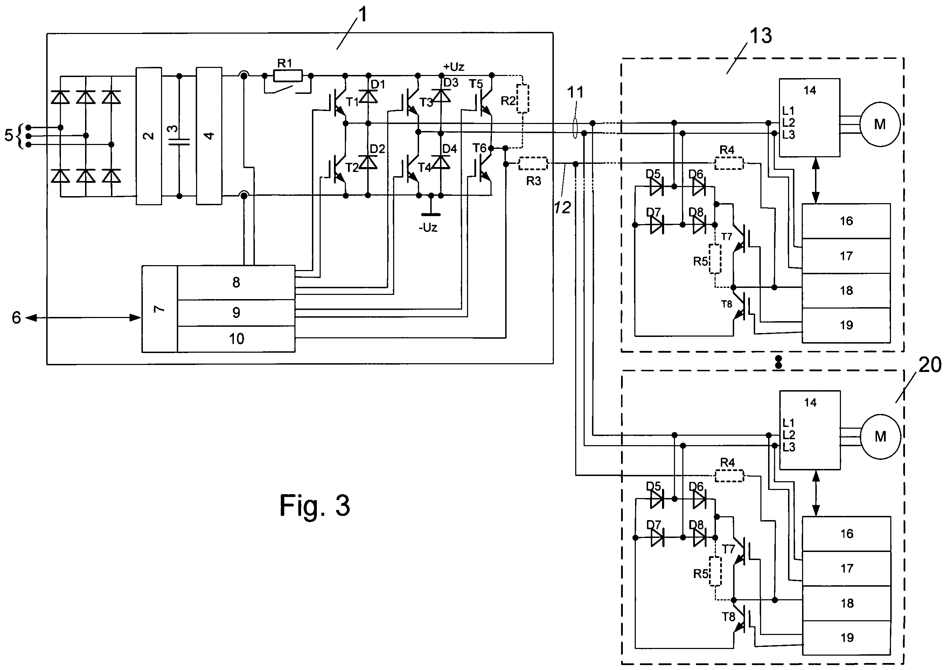

In dem weiteren Ausführungsbeispiel nach Figur 3 weist das Versorgungsmodul eine Endstufe mit drei Halbbrücken auf. Somit ist über die zwei Leitungen 11 zur Leistungsversorgungen einphasige Wechselspannung einspeisbar. Die Antriebe sind mit einem einphasigen Gleichrichter ausstattbar. Die dritte Leitung 12 wird wie auch bei Figur 2 zur Datenübertragung verwendet.

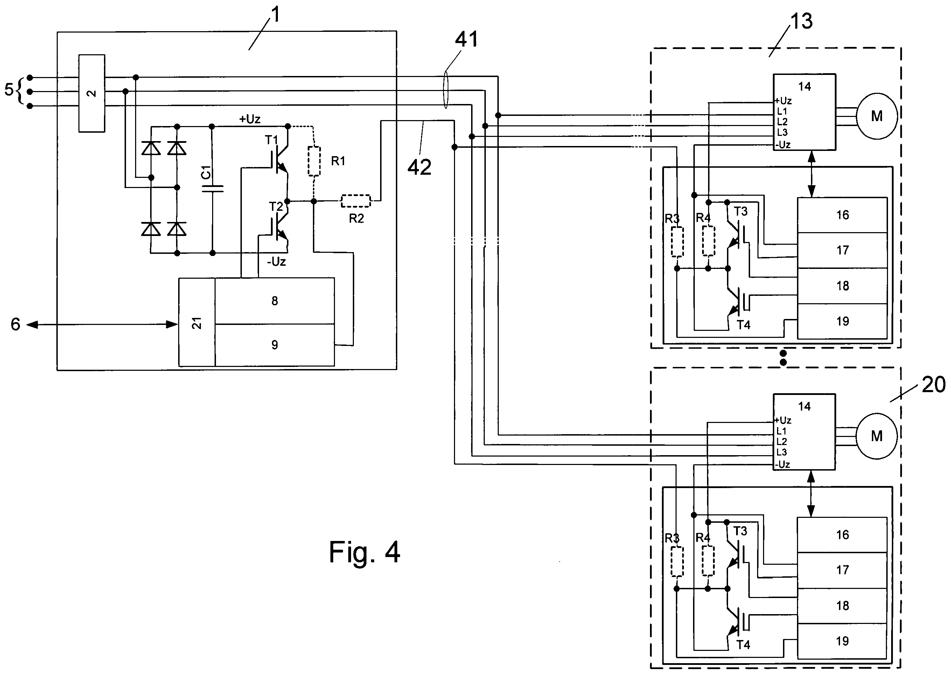

In dem weiteren Ausführungsbeispiel nach Figur 4 weist das Versorgungsmodul 40 nur eine Durchschleifung von Drehstromkabeln auf, wobei eine Netzentstörung vorgesehen ist. Außerdem wird aus zwei der Leitungen der Drehstromversorgung eine Gleichspannung erzeugt und einer Halbbrücke zugeführt. Diese ist mit der dritten Leitung 42 der Drehstromverkabelung verbunden zur Einspeisung eines Datenübertragungssignals. Vorzugsweise ist die dritte Leitung der Nullleiter eines Drehstromkabels, das drei Leitungen 41, nämlich die erste, zweite und vierte Leitung, für die Drehstromphasen vorsieht und darüber hinaus einen Nullleiter und einen PE-Leiter umfasst.

Bei weiteren erfindungsgemäßen Ausführungsbeispielen ist das Versorgungsmodul ohne Durchschleifung ausgeführt, also ist die Drehstromverkabelung außerhalb des Versorgungsmoduls ausgeführt.

Bei weiteren erfindungsgemäßen Ausführungsbeispielen wird die Gleichspannung aus drei der Leitungen der Drehstromversorgung erzeugt.

Bei weiteren erfindungsgemäßen Ausführungsbeispielen ist die Netzentstörung in den Verbrauchern jeweils angeordnet.

Bei weiteren erfindungsgemäßen Ausführungsbeispielen wird das Versorgungsmodul aus einer anderen Quelle versorgt, beispielsweise aus einer unabhängigen 24 V Versorgung in der industriellen Anlage oder dergleichen.

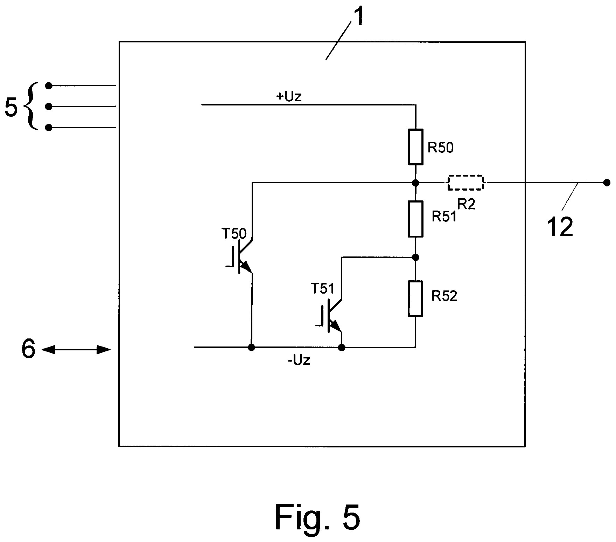

In dem weiteren Ausführungsbeispiel nach Figur 5 ist eine vorteilhafte Abwandlung der Endstufenhalbbrücke zur Datensignalerzeugung der Figur 2 oder auch der anderen Figuren gezeigt. In Figur 2 werden also die Schalter T3, T4 ersetzt durch die Schaltung der Figur 5.

Dabei sind die Widerstände R50, R51, R52 zur Spannungsteilung in Serie geschaltet. Durch geeignete Ansteuerung der Schalter T50 und T51, mit denen Teile der Serienschaltung kurzschließbar sind, sind drei verschiedene Potentiale erzeugbar. Somit ist die Information übertragbar, wobei die Codierung nicht binär sondern tertiär erfolgt.

Bei weiteren erfindungsgemäßen Ausführungsbeispielen sind statt der drei erzeugbaren Potentiale weitere Potentiale für die Datenübertragung erzeugbar.

### Bezugszeichenliste

1 Versorgungsmodul
2 Netzentstörung
3 Zwischenkreiskondensator
4 Optionaler Tief/Hochsetzsteller
5 Netzversorgung
6 Datenleitung zur SPS
7 Kommunikations- und Steuereinheit
8 Steuerschaltung
9 Sendeschaltung
10 Empfangsschaltung
11 Leistungsübertragung
12 Datenleitung
13 Erster Antrieb
14 Erster Umrichter, einphasig betreibbar
16 Kommunikations- und Steuerschaltung
17 Netzteil
18 Sendeschaltung
19 Empfangsschaltung
20 weiterer Antrieb
21 Protokoll / Pegelumsetzer
40 Versorgungsmodul
41 drei Leitungen des Drehstromkabels
42 dritte Leitung, insbesondere Nullleiter
R_BR Bremswiderstand
D1, D2, D3, D4, D5 Diode
T1, T2, T3, T4, T5 Halbleiterschalter

## Patentansprüche

1. System, umfassend ein Versorgungsmodul, eine Verkabelung und Verbraucher über welches Verbraucher mit Daten versorgbar sind,
wobei die Verbraucher über ein Drehstrom-Verkabelungssystem versorgt sind,
wobei eine erste, zweite und vierte Leitung der Drehstromkabel zur Drehspannungsversorgung für die Verbraucher vorgesehen sind
wobei die dritte Leitung zur digitalen Datenübertragung vorgesehen ist,
wobei das Drehstromkabel Nullleiter, PE-Leiter und drei weitere Leitungen umfasst oder das Drehstromkabel nur PE-Leiter und drei weitere Leitungen umfasst,
wobei die dritte Leitung ein für eine Phase vorgesehener Leiter ist,
wobei die Verbraucher mit dem Versorgungsmodul mittels der zumindest vier Leitungen umfassendem Drehstromkabel verbunden sind,
wobei die Verkabelung zwischen Versorgungsmodul und Antrieben Drehstromkabel und Mittel zur T-förmigen Drehstromverteilung, also Drehstrom-Verteilerkästen, umfasst
wobei die Verbraucher Mittel zur T-förmiger Drehstromverteilung umfassen,
wobei als Spannungsversorgung über die beiden Leitungen eine unipolare Spannung, wie Gleichspannung, vorgesehen ist,
wobei das Versorgungsmodul Mittel zur Herstellung der unipolaren Spannung umfasst, insbesondere Zwischenkreisspannung,
wobei das Versorgungsmodul einen Gleichrichter und einen Glättungskondensator, insbesondere Zwischenkreiskondensator, umfasst zur Herstellung der unipolaren Spannung,
wobei vom Versorgungsmodul oder einem jeweiligen Antrieb die dritte Leitung auf zwei oder mehr verschiedene elektrische Potentiale bringbar sind zur digitalen Datenübertragung,
wobei die Verbraucher elektrische Antriebe sind,
wobei das Versorgungsmodul einen Bremswiderstand umfasst,
wobei jeder Antrieb einen Bremswiderstand umfasst.

2. System nach Anspruch 1,
**dadurch gekennzeichnet, dass**
die zwei verschiedenen elektrischen Potentiale dem oberen beziehungsweise dem unteren Potential der Zwischenkreisspannung entsprechen oder zumindest im Wesentlichen entsprechen.

3. System nach mindestens einem der vorangegangenen Ansprüche,
**dadurch gekennzeichnet, dass**
das Versorgungsmodul und/oder ein Antrieb zumindest eine Sende- und/oder eine Empfangsschaltung umfasst oder umfassen, die zur Datenübertragung über die dritte Leitung vorgesehen sind.

4. System nach mindestens einem der vorangegangenen Ansprüche,
**dadurch gekennzeichnet, dass**
der Antrieb einen Umrichter und einen von diesem versorgbaren Elektromotor umfasst.

5. System nach mindestens einem der vorangegangenen Ansprüche,
**dadurch gekennzeichnet, dass**
aus der unipolaren Spannung eine Endstufe, umfassend elektronische Leistungshalbleiterschalter, versorgbar ist.

## Claims

1. System comprising a supply module, cabling and loads, by means of which system loads can be supplied with data,
wherein the loads are powered by means of a three-phase current cabling system,
wherein a first, second and fourth line of the three-phase power cable are provided for supplying the loads with a three-phase voltage,
wherein the third line is provided for digital data transmission,
wherein the three-phase power cable comprises neutral conductors, protective earth conductors and three additional lines, or the three-phase power cable comprises only protective earth conductors and three additional lines,
wherein the third line is a line provided for one phase,
wherein the loads are connected to the supply module by means of the three-phase power cable comprising at least four lines,
wherein the cabling between the supply module and drives comprises three-phase power cables and means for distributing the three-phase current in a T-like manner, i.e. three-phase current distribution boards,
wherein the loads comprise means for distributing the three-phase current in a T-like manner,
wherein a monopolar voltage such as DC voltage is provided as the supply voltage via the two lines,
wherein the supply module comprises means for producing the unipolar voltage, in particular a DC link voltage,
wherein the supply module comprises a rectifier and a filter capacitor, in particular a DC link capacitor, for generating the unipolar voltage,
wherein the supply module or a respective drive can bring the third line to two or more different electric potentials for the purpose of digital data transmission,
wherein the loads are electrical drives,
wherein the supply module comprises a braking resistor,
wherein each drive comprises a breaking resistor.

2. System according to claim 1,
**characterised in that**
the two different electrical potentials correspond to or at least substantially correspond to the upper or lower potential of the DC link voltage.

3. System according to at least one of the preceding claims,
**characterised in that**
the supply module and/or a drive comprise(s) at least one transmission and/or receiving circuit provided for data transmission via the third line.

4. System according to at least one of the preceding claims,
**characterised in that**
the drive comprises a converter and an electric motor that can be powered thereby.

5. System according to at least one of the preceding claims,
**characterised in that**
an output stage comprising electronic power semiconductor switches can be powered from the unipolar voltage.

## Revendications

1. Système, comprenant un module d'alimentation, un câblage et des consommateurs, par l'intermédiaire duquel des consommateurs peuvent être alimentés en données,
dans lequel les consommateurs sont alimentés par un système de câblage triphasé,
dans lequel des première, deuxième et quatrième lignes des câbles de courant triphasé sont prévues pour l'alimentation en tension triphasée des consommateurs,
dans lequel la troisième ligne est prévue pour la transmission de données numériques, dans lequel le câble de courant triphasé comprend un conducteur neutre, un conducteur PE et trois autres lignes ou le câble de courant triphasé comprend seulement un conducteur PE et trois autres lignes,
dans lequel la troisième ligne est un conducteur prévu pour une phase,
dans lequel les consommateurs sont reliés au module d'alimentation au moyen du câble de courant triphasé comprenant au moins quatre lignes,
dans lequel le câblage entre le module d'alimentation et les entraînements comprend des câbles de courant triphasé et des moyens de distribution de courant triphasé en forme de T, c'est-à-dire des coffrets de distribution de courant triphasé,
dans lequel les consommateurs comprennent des moyens de distribution de courant triphasé en forme de T,
dans lequel une tension unipolaire, telle qu'une tension continue, est prévue en tant que tension d'alimentation via les deux lignes,
dans lequel le module d'alimentation comprend des moyens pour produire la tension unipolaire, en particulier une tension de circuit intermédiaire,
dans lequel le module d'alimentation comprend un redresseur et un condensateur de lissage, en particulier un condensateur de circuit intermédiaire, pour produire la tension unipolaire,
dans lequel la troisième ligne peut être amenée par le module d'alimentation ou un entraînement respectif à deux ou plusieurs potentiels électriques différents pour la transmission de données numériques,
dans lequel les consommateurs sont des entraînements électriques,
dans lequel le module d'alimentation comprend une résistance de freinage,
dans lequel chaque entraînement comprend une résistance de freinage.

2. Système selon la revendication 1,
**caractérisé en ce que** les deux potentiels électriques différents correspondent ou correspondent au moins sensiblement aux potentiels supérieur, respectivement inférieur, de la tension de circuit intermédiaire.

3. Système selon au moins l'une des revendications précédentes,
**caractérisé en ce que** le module d'alimentation et/ou un entraînement comprend ou comprennent au moins un circuit d'émission et/ou de réception qui sont prévus pour la transmission de données via la troisième ligne.

4. Système selon au moins l'une des revendications précédentes,
**caractérisé en ce que** l'entraînement comprend un variateur et un moteur électrique qui peut être alimenté par celui-ci.

5. Système selon au moins l'une des revendications précédentes,
**caractérisé en ce qu'**un étage de sortie, comprenant des commutateurs électroniques à semi-conducteurs de puissance, peut être alimenté à partir de la tension unipolaire.
